# EUROPEAN PATENT APPLICATION

(11) **EP 4 730 763 A1**
(43) Date of publication of application: **22.04.2026**
(21) Application number: 25201648.0
(22) Date of filing: 11.09.2025
(51) Int. Cl.: H04N 9/31

(54) **PROJECTION DEVICE AND CONTROL METHOD THEREOF**

(30) Priority: 15.10.2024 US 202463707196 P; 09.01.2025 CN 202510032350
(71) Applicant: Coretronic Corporation, Hsin-Chu 300 (TW)
(72) Inventor: YANG, Chien-Yi, Hsin-Chu 300 (TW); HUANG, Hsin-Chang, Hsin-Chu 300 (TW); CHEN, Yun-Shih, Hsin-Chu 300 (TW)
(74) Representative: Ter Meer Steinmeister & Partner

(57) **Abstract**

A projection device includes a light source module including at least one light source, a light source driving circuit coupled to the light source module, and a control circuit coupled to the light source driving circuit. The light source driving circuit is configured to control a state of the at least one light source to be in an on state according to an enable signal. The control circuit is configured to provide the enable signal to the light source driving circuit, and control the number of times the enable signal is generated during a frame period according to a frame rate of a first image signal. During the frame period, a product of the number of times each of the at least one light source receives the enable signal and the frame rate of the first image signal is greater than or equal to a reference value.

## Description

This application claims priority of US provisional application serial no. 63/707,196, filed on October 15, 2024, and China application serial no. 202510032350.4, filed on January 9, 2025.

### BACKGROUND

### Technical Field

The disclosure relates to an electronic device and a control method thereof, and particularly relates to a projection device and a control method thereof.

### Description of Related Art

As the application range of projection devices becomes increasingly broad, the requirements for signal processing speed are also becoming higher. It is thus necessary to shorten the signal processing time to reduce the time interval between receiving the input signal and displaying the projected image by the projection device, so as to provide a better user experience.

However, current projection devices have a problem of color breaking. That is to say, in some cases, the human eye will distinguish between the colors red, green, and blue, resulting in a phenomenon where colors appear to be separated rather than blended into a cohesive image, such that it affects the viewing experience.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a skilled person.

### SUMMARY

The disclosure provides a projection device and a control method thereof, which may solve the technical problems existing in the above-mentioned prior art and provide good image quality.

Other objects and advantages of the disclosure may be further understood from the technical features disclosed in the disclosure.

The object is solved by the features of the independent claims Preferred embodiments are given in the dependent claims.

In order to achieve one or a portion of or all of the above objectives or other objectives, an embodiment of the disclosure provides a projection device including a light source module, a light source driving circuit, and a control circuit. The light source module includes at least one light source. The light source driving circuit is coupled to the light source module. The light source driving circuit is configured to control a state of the at least one light source of the light source module to be in an on state according to an enable signal. The control circuit is coupled to the light source driving circuit. The control circuit is configured to provide the enable signal to the light source driving circuit. The control circuit is configured to control the number of times the enable signal is generated during a frame period according to a frame rate of a first image signal. During the frame period, a product of the number of times each of the at least one light source of the light source module receives the enable signal and the frame rate of the first image signal is greater than or equal to a reference value.

In one or more embodiments, the product of the number of times each of the at least one light source of the light source module may receive the enable signal and the frame rate of the first image signal may be equal to the reference value.

**In** one or more embodiments, the at least one light source of the light source module may comprise a first light source, a second light source, and a third light source.

**In** one or more embodiments, during the frame period, the number of times the first light source, the second light source, and the third light source receive the enable signal may be the same.

**In** one or more embodiments, the light source driving circuit may comprise a first driving circuit electrically connected to the first light source, a second driving circuit electrically connected to the second light source, and a third driving circuit electrically connected to the third light source.

**In** one or more embodiments, the enable signal may comprise a first enable signal corresponding to the first light source, a second enable signal corresponding to the second light source, and a third enable signal corresponding to the third light source.

**In** one or more embodiments, the first driving circuit, the second driving circuit, and the third driving circuit may be configured to receive the first enable signal, the second enable signal, and the third enable signal from the control circuit, respectively.

**In** one or more embodiments, the at least one light source of the light source module may further comprise an auxiliary light source.

**In** one or more embodiments, the light source driving circuit may further comprise an auxiliary driving circuit electrically connected to the auxiliary light source.

**In** one or more embodiments, the auxiliary driving circuit may be configured to receive the second enable signal from the control circuit.

**In** one or more embodiments, the frame rate of the first image signal may be A Hertz, and the number of times each of the at least one light source of the light source module receives the enable signal during the frame period may be equal to the reference value divided by A.

**In** one or more embodiments, the projection device may further comprise a scaling circuit configured to receive the first image signal and to provide the first image signal to the control circuit at a corresponding time point according to an operation mode of the projection device.

**In** one or more embodiments, the frame rate of the first image signal may be a frame rate selected from a plurality of different values.

**In** one or more embodiments, the reference value may be a least common multiple of the plurality of different values.

**In** one or more embodiments, the plurality of different frame rate values may comprise at least two of 24 Hz, 25 Hz, 30 Hz, 50 Hz, 60 Hz, 120 Hz, and 240 Hz.

In one or more embodiments, the projection device may further comprise a light valve.

In one or more embodiments, the light valve may comprise a plurality of micromirrors.

In one or more embodiments, the light valve may be configured to control flipping of the plurality of micromirrors according to a light valve control signal.

In one or more embodiments, the control circuit may be further configured to provide the light valve control signal to the light valve.

Other objects and advantages of the disclosure may be further understood from the technical features disclosed in the disclosure.

In order to achieve one or a portion of or all of the above objectives or other objectives, an embodiment of the disclosure provides a control method of a projection device, including the following steps: controlling the number of times an enable signal is generated during a frame period according to a frame rate of a first image signal by the control circuit, and transmitting the enable signal to a light source driving circuit; and controlling a state of at least one light source of a light source module to be in an on state according to the enable signal by the light source driving circuit. During the frame period, a product of the number of times each of the at least one light source of the light source module receives the enable signal and the frame rate of the first image signal is greater than or equal to a reference value.

Based on the above, in embodiments of the disclosure, in order to avoid the phenomenon of flickering and color breaking, the control circuit may adjust the number of times each light source receives the enable signal during a frame according to the reference value related to the frame rate of the input image signal to provide good image quality.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

FIG. 1 is a schematic block diagram of a projection device of an embodiment of the disclosure.
FIG. 2 is a schematic block diagram of a projection device of another embodiment of the disclosure.
FIG. 3 is a schematic waveform diagram of an enable signal of an embodiment of the disclosure.
FIG. 4 is a schematic block diagram of a projection device of another embodiment of the disclosure.
FIG.5 flowchart of steps of a control method of a projection device of an embodiment.

### DESCRIPTION OF THE EMBODIMENTS

It is to be understood that other embodiment may be utilized and structural changes may be made without departing from the scope of the appended claims. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings. The use of "at least one of...and..." herein is meant to "one or more of one or more of the items contained in the list". For example, the use of "at least one of A and B" herein is meant to encompass only "A", or only "B", or "A and B". Similarly, the use of "at least one of A, B, and C" herein is meant to encompass only A, or only B, or only "C", or "any combination of A, B, and C".

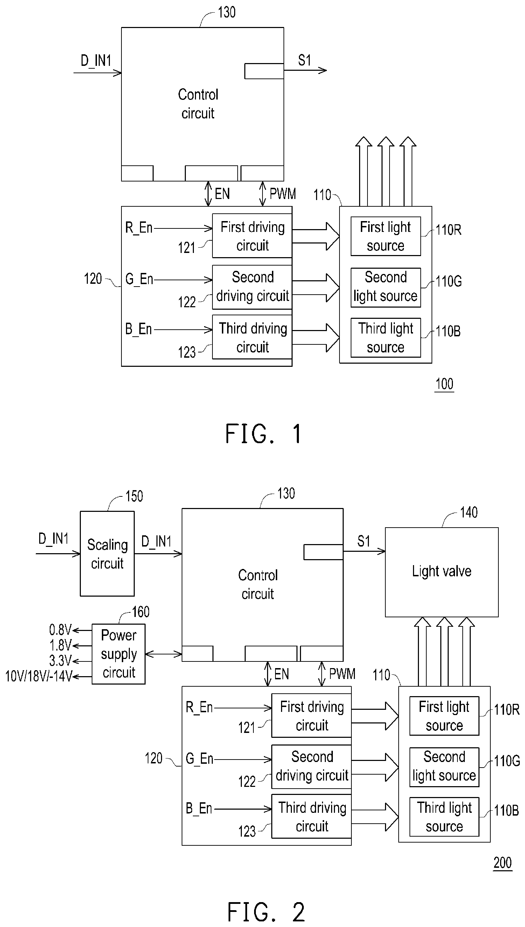

FIG. 1 is a schematic block diagram of a projection device according to an embodiment of the disclosure. With reference to FIG. 1, a projection device (such as a projector) 100 includes a light source module 110, a light source driving circuit 120, and a control circuit 130. The light source module 110 includes at least one light source. The light source driving circuit 120 is coupled to the light source module 110. The light source driving circuit 120 is configured to control a state of the at least one light source of the light source module 110 to be in an on state according to an enable signal EN. The control circuit 130 is coupled to the light source driving circuit 120. The control circuit 130 is configured to provide the enable signal EN to the light source driving circuit 120. The control circuit 130 is configured to control the number of times the enable signal EN is generated during a frame period according to a frame rate of a first image signal D_IN1. During a frame period, the product of the number of times each of the at least one light source of the light source module 110 receives the enable signal EN and the frame rate of the first image signal D_IN1 is greater than or equal to a reference value.

In other embodiments, the projection device 100 may further include a light valve, a scaling circuit, and a power supply circuit.

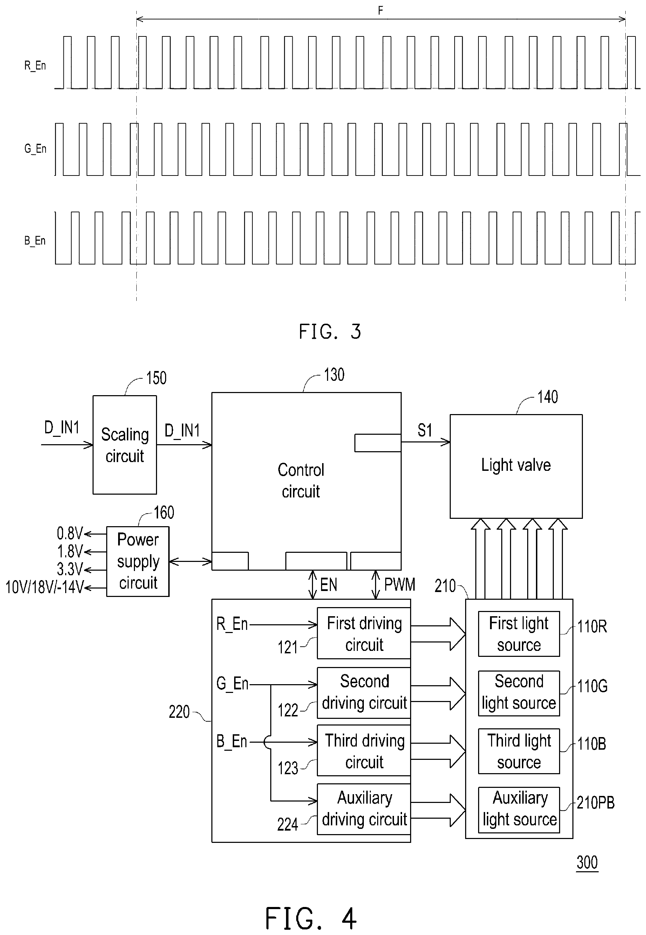

FIG. 2 is a schematic block diagram of a projection device according to another embodiment of the disclosure. FIG. 3 is a schematic waveform diagram of an enable signal according to an embodiment of the disclosure. With reference to FIG. 2 and FIG. 3, a projection device 200 further includes a light valve 140, a scaling circuit 150, and a power supply circuit 160.

The light source module 110 includes the at least one light source. The light source driving circuit 120 is coupled to the light source module 110. The light source driving circuit 120 is configured to control the state of the at least one light source of the light source module 110 to be in an on state according to the enable signal EN. The term "at least one light source" as used herein encompasses both a single light source and a plurality of light sources. Accordingly, the expression "each of the at least one light source" should be understood to cover the case of one light source as well as multiple light sources.

For example, the at least one light source of the light source module 110 includes a first light source 110R, a second light source 110G, and a third light source 110B, such as a red light source, a green light source, and a blue light source, that are configured to provide a red light beam, a green light beam, and a blue light beam respectively. Each of the first light source 110R, the second light source 110G, and the third light source 110B may have one or more light-emitting units. The plurality of light-emitting units may be light-emitting diodes (LEDs), laser diodes (LD), or a combination thereof.

The light source driving circuit 120 may be divided into a plurality of driving circuits according to the type or quantity of the light sources. For example, the light source driving circuit 120 includes a first driving circuit 121, a second driving circuit 122, and a third driving circuit 123. The first driving circuit 121 is electrically connected to the first light source 110R. The second driving circuit 122 is electrically connected to the second light source 110G. The third driving circuit 123 is electrically connected to the third light source 110B.

The enable signal EN includes a first enable signal R_En corresponding to the first light source 110R, a second enable signal G_En corresponding to the second light source 110G, and a third enable signal B_En corresponding to the third light source 110B. The first driving circuit 121, the second driving circuit 122, and the third driving circuit 123 are configured to receive the first enable signal R_En, the second enable signal G_En, and the third enable signal B_En from the control circuit 130, respectively. The light source driving circuit 120 (the first driving circuit 121, the second driving circuit 122, and the third driving circuit 123) is configured to provide corresponding driving currents to the light source module 110 according to the enable signal EN (the first enable signal R_En, the second enable signal G_En, and the third enable signal B_En), so as to control the state of the at least one light source (the first light source 110R, the second light source 110G, and the third light source 110B) of the light source module 110 to be in an on state.

The control circuit 130 is coupled to the light source driving circuit 120. The control circuit 130 provides a light source control signal to the light source driving circuit 120 to drive the at least one light source in the light source module 110 to emit light. The light source control signal includes, for example, the enable signal EN and a pulse width modulation signal PWM. The control circuit 130 is configured to provide the enable signal EN and the pulse width modulation signal PWM to the light source driving circuit 120. The enable signal EN is configured to control the state of the plurality of light sources 110R, 110G, and 110B of the light source module 110 to be in an on state. The pulse width modulation signal PWM is configured to adjust the brightness of the at least one light source of the light source module 110 (by adjusting the duty cycle of the PWM signal).

The control circuit 130 may provide the enable signal EN to the light source driving circuit 120 according to the emission timing sequence of each light source, so that the light source driving circuit 120 controls the turning on or off of each light source 110R, 110G, and 110B. As shown in FIG. 3, the control circuit 130 is configured to control the number of times the enable signal EN is generated during a frame period F according to the frame rate of the first image signal D_IN1. The turning on or off of light sources of different colors (the first light source 110R, the second light source 110G, and the third light source 110B) is controlled respectively by the first enable signal R_En, the second enable signal G_En, and the third enable signal B_En from the control circuit 130.

In an embodiment, the light source driving circuit 120 may be configured to control the state of the light sources 110R, 110G, and 110B of the light source module 110 to be in an off state according to a disable signal (not shown). The control signal from the control circuit 130 includes the enable signal EN and the disable signal, and the enable signal EN and the disable signal are alternately switched during the frame period F. Alternatively, in another embodiment, when the light source driving circuit 120 does not receive the enable signal EN output by the control circuit 130, the state of the light sources 110R, 110G, and 110B is in an off state, and during the frame period F, the control circuit 130 will intermittently output the enable signal EN, and repeatedly switch between outputting the enable signal EN and not outputting the enable signal EN.

During the frame period F, for example, 1/60 second = 16.6 milliseconds (ms), the product of the number of times each light source of the light source module 110 receives the enable signal EN and the frame rate of the first image signal D_IN1 is greater than or equal to the reference value, thereby effectively reducing color breaking (color breakup). In another embodiment, the product of the number of times each light source of the light source module 110 receives the enable signal EN and the frame rate of the first image signal D_IN1 may be set to equal to the reference value.

In the embodiment, the frame rate of the first image signal D_IN1 (corresponding to the frequency of the vertical synchronization signal of the first image signal D_IN1) is A Hertz (Hz), where A is a positive integer, and may be, for example, 24, 25, 30, 50, 60, 120, or 240. That is, the frame rate of the first image signal D_IN1 may be 24 Hz, 25 Hz, 30 Hz, 50 Hz, 60 Hz, 120 Hz, or 240 Hz. In order to avoid the flickering phenomenon, the control circuit 130 may control the number of times each light source of the light source module 110 receives the enable signal En during the frame period F to be equal to the reference value divided by A, where the value of A and the reference value may be adjusted according to actual use requirements. The reference value is set according to a plurality of different frame rate values of the first image signal D_IN1. For example, the plurality of different frame rate values of the first image signal D_IN1 (the frame rate of the input signal from the external image source) are selected from at least two of 24 Hz, 25 Hz, 30 Hz, 50 Hz, 60 Hz, 120 Hz, and 240 Hz, and the reference value is a least common multiple of the above-mentioned plurality of different values. For example, the reference value is the least common multiple of the above-mentioned plurality of different values, and the reference value may be set to 1200. Therefore, the control circuit 130 may adjust the number of switching times for turning on or off each light source based on a frequency of 1200 Hz. In other embodiments, the reference value may alternatively be defined as any predetermined frequency or threshold that is sufficient to avoid flickering or color breaking.

Taking the reference value equal to 1200 and the frame rate of the first image signal D_IN1 as 60 Hz as an example, during the frame period F (16.6 milliseconds), the control circuit 130 will adjust the number of times each light source receives the enable signal EN to 1200/60=20 times, meaning that light sources of different colors will each receive 20 enable signals EN, that is, 20 color cycles (cc), within a frame period, as shown by the enable signal EN (the first enable signal R_En, the second enable signal G_En, and the third enable signal B_En) depicted in FIG. 3. By rapidly switching the state of each light source between the on state and the off state, the human eye will be unable to distinguish individual red, green, and blue light beams, thereby avoiding the problem of color breaking and improving the image quality of the projection device 200.

During the frame period F, the number of times the first light source 110R, the second light source 110G, and the third light source 110B receives the enable signal EN (the first enable signal R_En, the second enable signal G_En and the third enable signal B_En) may be the same. For example, the first light source 110R, the second light source 110G, and the third light source 110B are respectively turned on at different timing sequences, as shown in FIG. 3. In other embodiments, the number of times the light sources 110R, 110G, and 110B receive the enable signal EN may also be different.

In an embodiment, since the persistence of vision of the human eye may not perceive flickering at frequencies of 60 Hz or higher, the control circuit 130 may set the number of times each light source receives the enable signal EN during the frame period F to 20 times. As the frequency of the vertical synchronization signal of the first image signal D_IN1 from the input image source changes (that is, the frame rate changes), the color switching period (number of color cycles) will also be adjusted accordingly to meet the requirement that the product of the number of times each light source receives the enable signals EN and the frame rate of the first image signal D_IN1 equals a reference value (such as 1200). For example, when the frequency of the vertical synchronization signal is 120 Hz, each light source may be adjusted to receive the enable signal EN 10 times during the frame period F, that is, 10 color cycles; when the frequency of the vertical synchronization signal is 240 Hz, each light source may be adjusted to receive the enable signal EN 5 times during the frame period F, that is, 5 color cycles.

In an embodiment, the scaling circuit 150 is disposed between the input interface connected to the external image source and the control circuit 130. The input interface includes, but is not limited to, a serial digital interface (SDI) or high definition multimedia interface (HDMI). The scaling circuit 150 is configured to receive the first image signal D_IN1 and provide the first image signal D_IN1 to the control circuit 130 at a corresponding time point according to an operation mode of the projection device 200. The scaling circuit 150 may set the first image signal D_IN1 to be output to the control circuit 130 at a fixed time according to different operation modes. Alternatively, when receiving the first image signal D_IN1, the scaling circuit 150 may directly transmit the first image signal D_IN1 to the control circuit 130, which may further reduce the latency of image processing and thus provide a better image experience. In some embodiments, the scaling circuit 150 may be implemented as a Scaler IC, such as a video scaler integrated circuit which is configured to process input timing signals and output corresponding image signals to the control circuit 130. In some embodiments, the scaling circuit 150 may select the fixed timing mode or the bypass input timing mode according to the operation mode of the projection device 100, so as to balance latency and synchronization requirements.

In an embodiment, the control circuit 130 is further configured to provide a light valve control signal S1 to the light valve 140. The light valve 140 includes a plurality of micromirrors (not shown). The light valve 140 is configured to control the flipping of the plurality of micromirrors according to the light valve control signal S1 to convert the illumination beam (for example, at least one of the red beam, the green beam, and the blue beam) from the light source module 110 into an image beam. The image beam is projected out of the projection device 200 through the projection lens of the projection device 200. The control circuit 130 controls the number of times each light source of the light source module 110 receives the enable signal En during the frame period F, thereby increasing the modulation frequency of the light beam by the light valve 140. The power supply circuit 160 is configured to provide voltage signals required for the operation of the plurality of circuits in the projection device 200.

In an embodiment, the control circuit 130 includes, for example, a central processing unit (CPU), other programmable general-purpose or special-purpose micro control units (MCUs), a microprocessor, a digital signal processor (DSP), a programmable controller, an application specific integrated circuit (ASIC), a graphics processing unit (GPU), an image signal processor (ISP), an image processing unit (IPU), an arithmetic logic unit (ALU), a complex programmable logic device (CPLD), a field programmable gate array (FPGA), or other similar elements, or a combination thereof. In an embodiment, the control circuit 130 is, for example, a DLPC8445X control chip. In some embodiments, the control circuit 130 may be implemented with counters, frequency dividers, or FPGA logic configured to generate the enable signals in synchronization with the vertical synchronization (Vsync) signal of the first image signal, so that the number of enable signals generated within each frame period may be accurately adjusted according to the frame rate.

In an embodiment, the light valve 140 is, for example, a digital micro-mirror device (DMD). In an embodiment, the power supply circuit 160 is, for example, a power management IC (PMIC), such as a DLPA308X power management chip (IC).

The hardware structures of the light source module 110, the light source driving circuit 120, the light valve 140, the scaling circuit 150, and the power supply circuit 160 are well known in the art, and may be readily understood by those skilled in the art based on common knowledge in the relevant technical field.

In the embodiment of FIG. 2, the light source module 110 includes three light sources 110R, 110G, and 110B. FIG. 4 is a schematic block diagram of a projection device according to another embodiment of the disclosure. In the embodiment of FIG. 4, a light source module 210 further includes an auxiliary light source 210PB. The auxiliary light source 210PB is configured to provide a green light beam, for example. The light source driving circuit 220 further includes an auxiliary driving circuit 224. The auxiliary driving circuit 224 is electrically connected to the auxiliary light source 210PB. The auxiliary driving circuit 224 is configured to receive the second enable signal G_En from a control circuit 230. Since both the auxiliary light source 210PB and the second light source are green light sources, the auxiliary driving circuit 224 is configured to receive the same enable signal (the second enable signal G_En) as the second driving circuit.

The control circuit 130 may provide the second enable signal G_EN to the auxiliary driving circuit 224 according to the emission timing sequence of the green light source, so that the auxiliary driving circuit 224 controls the turning on or off of the auxiliary light source 210PB. Therefore, the auxiliary light source 210PB has the same on/off timing sequence as the second light source 110G (green light source).

During the frame period F, the number of switching times of the enable signal EN (the first enable signal R_En, the second enable signal G_En and the third enable signal B_En) received by the first light source 110R, the second light source 110G, the third light source 110B, and the auxiliary light source 210PB is the same. For example, the first light source 110R, the second light source 110G, and the third light source 110B are turned on at respective timing sequences. For example, the third light source 110B and the auxiliary light source 210PB are turned on at the same timing sequence.

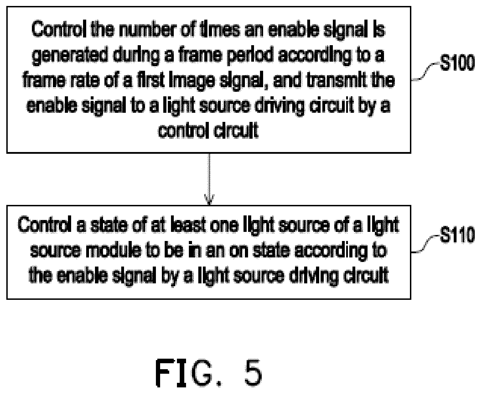

FIG. 5 is a flowchart of steps of a control method of a projection device according to an embodiment of the disclosure. With reference to FIG. 1, FIG. 2, FIG. 4, and FIG. 5, the control method of the projection device of the embodiment is at least applicable to the projection devices 100, 200, and 300 depicted in FIG. 1, FIG. 2, and FIG. 4, but the disclosure is not limited thereto.

Taking the projection device 100 depicted in FIG. 1 as an example, when the control circuit 130 of the projection device 100 receives the first image signal D_IN1 from the external image source, in step S100, the control circuit 130 controls the number of times the enable signal EN is generated during the frame period F according to the frame rate of the first image signal D_IN1, and transmits the enable signal EN to the light source driving circuit 120. In step S110, the light source driving circuit 120 controls the state of the at least one light source 110R, 110G, and 110B of the light source module 110 to be in an on state according to the enable signal EN.

The control method of the projection device in other embodiments of the disclosure may be readily understood from the description of the embodiments of FIG. 1 to FIG. 4, and thus, repeated description will be omitted for brevity.

To sum up, in embodiments, in order to avoid flickering and color breaking, the control circuit may adjust the number of times each light source receives the enable signal during the frame period according to the reference value related to the frame rate of the input image signal. The scaling circuit may also reduce the latency of image processing, thereby providing a better user experience.

The description of the invention is presented for purposes of illustration and description. It is not intended to be exhaustive or to limit the invention to the precise form or to embodiments. The description should be regarded as illustrative rather than restrictive. Obviously, many modifications and variations will be apparent to practitioners skilled in this art. The embodiments are described in order to best explain the principles of the invention and its best mode practical application, thereby to enable skilled person to understand the invention for various embodiments and with modifications as are suited to the particular use or implementation contemplated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

## Claims

1. A projection device (200), comprising:
a light source module (110), comprising at least one light source (110R, 110G; 110B);
a light source driving circuit (120), coupled to the light source module (110), wherein the light source driving circuit (120) is configured to control a state of the at least one light source (110R, 110G; 110B) of the light source module (110) to be in an on state according to an enable signal (EN); and
a control circuit (130), coupled to the light source driving circuit (120), wherein the control circuit (130) is configured to provide the enable signal (EN) to the light source driving circuit (120), the control circuit (130) is configured to control the number of times the enable signal (EN) is generated during a frame period according to a frame rate of a first image signal (D_IN1)and during the frame period, a product of the number of times each of the at least one light source (110R, 110G; 110B) of the light source module (110) receives the enable signal (EN) and the frame rate of the first image signal (D_IN1) is greater than or equal to a reference value.

2. The projection device according to claim 1, wherein the product of the number of times each of the at least one light source (110R, 110G; 110B) of the light source module (110) receives the enable signal (EN) and the frame rate of the first image signal (D_IN1) is equal to the reference value.

3. The projection device according to claim 1 or 2, wherein the at least one light source (110R, 110G; 110B) of the light source module (110) comprises a first light source (110R), a second light source (110G), and a third light source (110B).

4. The projection device according to claim 3, wherein during the frame period, the number of times the first light source (110R), the second light source (110G), and the third light source (110B) receive the enable signal (EN) is the same.

5. The projection device according to claim 3 or 4, wherein the light source driving circuit (120) comprises a first driving circuit (121) electrically connected to the first light source (110R), a second driving circuit (122) electrically connected to the second light source (110G), and a third driving circuit (123) electrically connected to the third light source (110B).

6. The projection device according to claim 3, 4 or 5, the enable signal (EN) comprises a first enable signal (R_En) corresponding to the first light source (110R), a second enable signal (G_En) corresponding to the second light source (110G), and a third enable signal (B_En) corresponding to the third light source (110B).

7. The projection device according to claim 5 or 6, wherein the first driving circuit (121), the second driving circuit (122), and the third driving circuit (123) are configured to receive the first enable signal (R_En), the second enable signal (G_En), and the third enable signal (B_En) from the control circuit (130), respectively.

8. The projection device according to claim 6 or 7, wherein the at least one light source of the light source module (110) further comprises an auxiliary light source (210PB), the light source driving circuit (220) further comprises an auxiliary driving circuit (224) electrically connected to the auxiliary light source (210PB), and the auxiliary driving circuit (224) is configured to receive the second enable signal (G_EN) from the control circuit (130).

9. The projection device according to any one of the preceding claims, wherein the frame rate of the first image signal (D_IN1) is A Hertz, and the number of times each of the at least one light source of the light source module (110) receives the enable signal (EN) during the frame period is equal to the reference value divided by A.

10. The projection device according to any one of the preceding claims, further comprising a scaling circuit (150) configured to receive the first image signal (D_IN1) and to provide the first image signal (D_IN1) to the control circuit (130) at a corresponding time point according to an operation mode of the projection device (300).

11. The projection device according to any one of the preceding claims, wherein the frame rate of the first image signal (D_IN1) is a frame rate selected from a plurality of different values, and the reference value is a least common multiple of the plurality of different values.

12. The projection device according to claim 11, wherein the plurality of different frame rate values comprise at least two of 24 Hz, 25 Hz, 30 Hz, 50 Hz, 60 Hz, 120 Hz, and 240 Hz.

13. The projection device according to any one of the preceding claims, further comprising a light valve (140), wherein the light valve (140) is controlled according to a light valve control signal (S1), and the control circuit (130) is further configured to provide the light valve control signal (S1) to the light valve (140).

14. The projection device according to claim 13, wherein the light valve (140) comprises a plurality of micromirrors, the light valve (140) is configured to control flipping of the plurality of micromirrors according to the light valve control signal (S1).

15. A control method of a projection device, comprising the following steps:
controlling the number of times an enable signal (EN) is generated during a frame period according to a frame rate of a first image signal (D_IN1), and transmitting the enable signal (EN) to a light source driving circuit (120) by a control circuit (130); and
controlling a state of at least one light source of a light source module (110) to be in an on state according to the enable signal (EN) by the light source driving circuit (120), wherein during the frame period, a product of the number of times each of the at least one light source of the light source module (110) receives the enable signal (EN) and the frame rate of the first image signal (D_IN1) is greater than or equal to a reference value.
